Europäisches Patentamt

European Patent Office

Office européen des brevets

(11) Veröffentlichungsnummer: **0 363 367**
**B1**

## (12) EUROPÄISCHE PATENTSCHRIFT

(45) Veröffentlichungstag der Patentschrift: 16.01.91

(21) Anmeldenummer: 88902453.5

(22) Anmeldetag: 11.03.88

(86) Internationale Anmeldenummer:
PCT/EP88/00189

(87) Internationale Veröffentlichungsnummer:
WO 88/07639 06.10.88 Gazette 88/22

(51) Int. Cl.⁵: **F 16 H 1/445**, B 60 K 23/04,
F 16 D 27/12, F 16 H 57/10

(54) ANORDNUNG EINER ELEKTROMAGNET-ZAHNKUPPLUNG.

(30) Priorität: 21.03.87 DE 3709407

(43) Veröffentlichungstag der Anmeldung:
18.04.90 Patentblatt 90/16

(45) Bekanntmachung des Hinweises auf die
Patenterteilung:
16.01.91 Patentblatt 91/03

(84) Benannte Vertragsstaaten:
DE FR GB IT SE

(56) Entgegenhaltungen:
WO-A-86/02981
DE-U-8 633 084
US-A-3 414 100

(73) Patentinhaber: ZAHNRADFABRIK
FRIEDRICHSHAFEN AKTIENGESELLSCHAFT
Löwentaler Strasse 100 Postfach 2520
D-7990 Friedrichshafen 1 (DE)

(72) Erfinder: KELLER, Walter
Zur Öle 31
D-7777 Salem 2 (DE)

Courier Press, Leamington Spa, England.

**Beschreibung**

Die Erfindung betrifft eine Anordnung gemäß dem Oberbegriff des Anspruches 1 und geht dabei aus von der US—A—3414 100. Daraus ist bekannt, Einzelteile einer Elektromagnet-Zahnkupplung zu einer Buchse mit Halteflansch so zusammenzufassen, daß deren Endmontage durch Einstecken der Buchse samt darin vormontierten Kupplungselementen in ein Getriebegehäuse vereinfacht wird. Diese bekannte Kupplungsanordnung weist indessen noch Nachteile auf, welche ihren Einsatz insbesondere für Sperren an Achsgetrieben behindern bzw. verunmöglichen. So muß beim bekannten Prinzip der Anker schon im Gehäuse montiert sein, ehe die Buchse, in welcher lediglich der Magnet und ein Lager vormontiert sind, eingesteckt werden kann. Der Anker und ein weiteres Zwischenglied mit Axialverzahnung auf der Welle müssen schon vorher einbauseitig vor einem dort angeordneten Kupplungsrad montiert sein. Die Mitnahmeverzahnung ragt also nicht antriebsseitig aus dem Gehäuse hervor und der Anker wird vom Magneten lediglich stirnseitig und nicht auch peripher umfaßt, so daß eine ausreichende Magnetkraft nur über einen relativ klein zu haltenden axialen Luftspalt übertragbar ist. Wegen des infolgedessen beschränkten Hubes sind nur niedrige Zähne und somit nur geringe Drehmomente möglich. Die Justage des Anker-Lüftspieles ist hier mit der Einstellung des Lagers zusammengelegt. Zudem schaltet diese Kupplung unter Strom aus, eignet sich also schon deshalb nicht für Sperren, die stromlos geöffnet sein müssen.

Elektromagnet-Zahnkupplungen, wie sie beispielsweise aus der WO—A—86/022981 bekannt sind, bei denen Ringmagnet, Schiebemuffe und Anker jeweils einzeln in ein Getriebegehäuse einzupassen sind, führen zu aufwendiger Montage und platzraubenden und den magnetischen Streufluß vergrößernden Anordnungsverhältnissen. Höhere elektrische Leistungen bedingen dann nochmals größere Bauelemente und weiteren baulichen und materiellen Aufwand. Getriebegehäuse für die Aufnahme einer Elektromagnet-Zahnkupplung solcher Art speziell zu vergrößern und in besonderer Weise zu gestalten, ist oftmals unmöglich, wie beispielsweise bei standardisierten, rohrähnlichen Gehäusen, wie sie bei Achsgetrieben vorkommen.

Die Aufgabe der Erfindung besteht im wesentlichen darin, eine z. B. auch für den fakultativen Einsatz in einteiligen Achsgetrieben als Sperrenbetätigung geeignete, schnell und geräuscharm arbeitende Elektromagnet-Zahnkupplung in einer möglichst vollständig vormontierbaren Einsteckbuchse zu schaffen, bei der die Mitnahmeverzahnung mit ausreichend hohen Zähnen ausbildbar ist und das Kupplungsrad antriebsseitig vor dem Gehäuse und der Anker abtriebsseitig im Gehäuse liegen, in welches die Elektromagnet-Zahnkupplung ohne Beeinträchtigung des AnkerLüftspieles eingeflanscht werden kann, ohne daß am Getriebe nennenswerte Gehäuse- bzw. Anordnungsänderungen erforderlich sind.

Die Lösung wird mit den kennzeichnenden Merkmalen des Anspruches 1 hauptsächlich insofern erreicht, als der Ringmagnet eine auf der Welle axial verschiebliche Schiebemuffe umschließt, die ihrerseits den Anker in der gemeinsamen Baugruppe abtriebsseitig, jedoch eine radiale Mitnahmeverzahnung antriebsseitig aus dem Gehäuse hervorstehend aufweist. Die als Buchse gestaltete Baugruppe ist für sich alleine komplett anschlußfertig in das Gehäuse einschiebbar und mittels eines Flansches befestigbar, ohne daß sich dabei das Anker-Lüftspiel verändern könnte. Eine radiale Abstützung der Buchse bei axialem Abstand vom Magneten ermöglicht eine den Magnetfluß günstig konzentrierende Anordnung und bei entsprechender Werkstoffwahl für die den Magneten umgebenden Teile gelingt es, mit nur einem einzigen und relativ kleinen Ringmagneten innerhalb der Buchse ausreichende Schaltund Haltekräfte zu erreichen.

Bei direkter Führung der Schiebemuffe auf eine Außenverzahnung der Welle und Anbringung der Gegenverzahnung an der eingriffsseitigen Stirnfläche eines seinerseits als Außenlamellenträger einer Reibverbindungseinrichtung dienenden weiteren Nabenbundes kann die Schiebemuffe auf der gleichen Außenverzahnung der Welle drehfest gehalten sein wie der Innenlamellenträger der Reibverbindungseinrichtung.

Bei drehfester Führung der Schiebemuffe in einer Innenverzahnung eines Nabenbundes und Anbringung der Gegenverzahnung an der eingriffsseitigen Stirnfläche eines seinerseits als Innenlamellenträger einer Reibverbindungseinrichtung dienenden weiteren Nabenbundes kann die Schiebemuffe von evtl. Schiebebewegungen der Welle, wie beispielsweise bei angetriebenen Fahrzeuglenkachsen, freigehalten werden. Auch liegt dann die Stirnverzahnung am kleineren Nabenbund und ist fertigungsgünstiger.

Ein axial zwischen Magnet und Lager aus der Schiebemuffe radial überstehender Ringkragen bietet sowohl die Möglichkeit, diesen als Anschlag zu nutzen und dafür einen Abschlußboden für die Buchse außerhalb der Ankerscheibe einzusparen als auch bei entsprechender Magnetgestaltung diesen als Gegenanker für die Rückstellung zu nutzen bzw. an seiner eingriffsseitigen Stirnfront Rückstellfedern bzw. Anschlagbolzen anzubringen.

Mittels magnetseitig mit ihren Köpfen im Ringkragen steckender, aber hier nicht durchschiebbarer Bolzenschrauben im Nabenbund ist ohne einen Abschlußboden der Buchse ein fein einstellbarer Endanschlag der Schiebemuffe in Öffnungsrichtung erreichbar.

Wird ein Abschlußboden der Buchse vorgesehen und als Anschlag der Schiebemuffe in Öffnungsrichtung genutzt, steht der Platz der vorerwähnten Bolzenschrauben z.B. für die Anbringung von Rückstellfedern zur Verfügung.

Bei Anordnung eines lösbar in der Buchse befestigten Bodens ist es leicht, diesen aus nichtmagnetischem Material zur Magnetflußerhöhung zu fertigen.

Durch Vorkehrung eines gewissen Luftspaltes, axial zwischen Ringmagnet und Ringkragen bei Öffnungsstellung der Schiebemuffe, verbessern sich nicht nur die Magnetflüsse in ihr, sondern es wird auch sichergestellt, daß nicht bei stärker eingelaufenen Wälzlagern der Ringmagnet zur Anschlagfläche wird.

Mittels Rückstellfedern zwischen dem Ringkragen der Schiebemuffe und dem jeweils gegenüberliegenden Nabenbund wird gewährleistet, daß es im stromlosen Zustand keinen zufälligen Eingriff der Mitnahmeverzahnung gibt.

Durch eine entsprechend große radiale Eindrehung in der Stirnfläche ist es möglich, den Ringbund der Buchse im Innenflansch des Getriebegehäuses radial besonders steif abzustützen, ohne daß er eine Verlängerung des Gesamtgetriebegehäuses verursacht.

Bei Anbringung der Mitnahmeverzahnung, radial außerhalb der Rückstellfedern, z.B. am Ringkragen der Schiebemuffe, wird die Einbaumöglichkeit für eine zur Welle konzentrische Einzelfeder geschaffen und es kann mit einer besonders kurzen Schiebemuffe gearbeitet werden.

Bei Ausführung der Ankerscheibe mit einem sich in Richtung Ringmagnet verjüngendem Durchmesser und Zuordnung eines davon durch einen Luftspalt radial getrennten Polringes mit etwa dem gleichen Winkel sich in Richtung Ringmagnet im Innendurchmesser verjüngendem Polring auf der Innenseite der Buchse, axial zwischen Deckel und Ringmagnet, wird der Magnetfluß verbessert und ein sicheres Einschalten in Schließrichtung erreicht.

Durch in Hauptrichtung parallel zur Welle angeordnete Ölkanäle, die die Buchse innerhalb des Flansches umgeben wird erreicht, daß ein axialer Schmiermittelaustausch axial durch den Kupplungsbereich hindurch nicht beeinträchtigt wird, was insbesondere bei Achsgetrieben bedeutungsvoll ist.

Bei Anordnung des Ringmagneten in der Buchse, etwa radial unter dem Außenflansch, ist es möglich, eine Kabeleinführung im Schutzbereich des Flansches vorzusehen und Schwächungen des Getriebegehäuses an exponierten Stellen zu vermeiden.

Die Kombination der erfindungsgemäß angeordneten Elektromagnet-Zahnkupplung mit einem die Welle antreibenden Differentialgetriebe an sich bekannter Art kann auf verschiedene Arten vorteilhaft wirken:

In jedem Falle kann die Zahnkupplung auf eine billige, zuverlässige Weise im Achsgehäuse fakultativ untergebracht werden.

Handelt es sich nur um ein nichtselbstsperrendes Differential, kann damit aus dem Einfachdifferential ein voll sperrbares Differential gemacht werden. Handelt es sich dagegen um ein Selbstsperrdifferential, würde die Zahnkupplung nicht bei allen kleinsten Drehzahldifferenzen betätigt und somit eine lange Lebensdauer erhalten, da ihre Verzahnung entlastet ist. Dank Einschaltbarkeit von Vollsperrungen mittels der Zahnkupplungen in Abhängigkeit bestimmter Sensoren ergibt sich zudem eine Möglichkeit zur Senkung des Differential-Sperrwertes und damit der Reduzierung von Reifenverschleiß und Lenkkräften unter Beibehaltung voller Bremssicherheit dank sofortiger Zuschaltbarkeit aller Räder über die Elektromagnet-Zahnkupplungen.

Dank der erfindungsgemäßen Anordnung kann die bauliche Vorkehrung zum Einsatz einer Elektromagnet-Zahnkupplung sich lediglich auf eine innere Anlagefläche bzw. Eindrehung im betreffenden Gehäuseinnenflansch beschränken und es brauchen nicht unterschiedliche Gehäuse für Achsen mit und ohne Sperrkupplung vorgesehen zu werden.

Indessen ist es auch möglich, beispielsweise bei Achsen, beide rohrförmigen Gehäusehälften für die Achswellen zum Einbau derartiger Buchsen vorzusehen und entweder beide mit dem Differential zusammenwirken zu lassen oder in die eine Hälfte eine Elektro-Bremse sinngemäß gleicher Bauart wie die Elektromagnet-Zahnkupplung einzusetzen.

Die Erfindung wird im folgenden anhand dreier Beispiele gemäß der schematischen Zeichnungen näher erläutert:

Fig. 1 zeigt einen Querschnitt der Anordnung der Elektromagnet-Zahnkupplung in einer Vormontage-Buchse, bei welcher sich die ausgekuppelte Schiebemuffe in direktem Formschluß mit der von ihr angetriebenen Welle befindet.

Fig. 1A zeigt ein Detail dazu mit zwecks Starterleichterung konisch ausgeführter Ankerscheibe.

Fig. 2 zeigt eine Variante der Anordnung, bei welcher die Schiebemuffe über die Nabe des Kupplungsteiles, unabhängig von der angetriebenen Welle mitgedreht wird, bevor ihre Stirnverzahnung mit der Nabe der anzutreibenden Welle gekuppelt wird. Dabei ist ein axial verstellbarer Anschlag in Offenstellung mittels Bolzenschrauben vorgesehen.

Fig. 3 zeigt eine Variante hierzu, bei der der Axialanschlag zwischen der Schiebemuffe und einem Boden der Buchse liegt und die Schiebemuffe entgegen einer Rückstellfeder schließt.

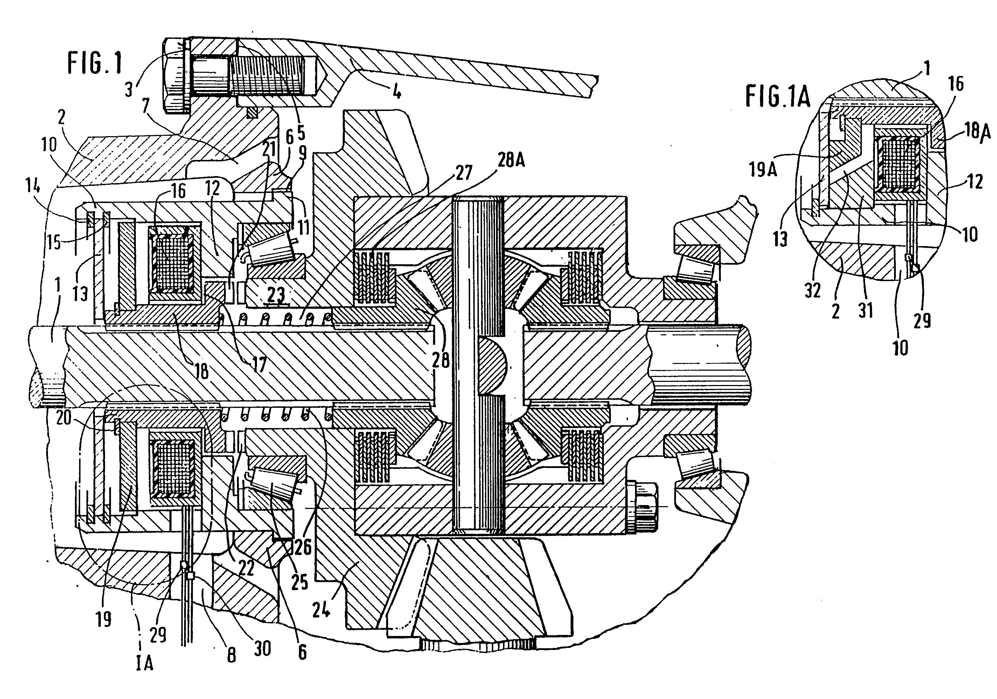

In Fig. 1 ist eine Welle 1 vom rohrförmigen Ende eines Getriebegehäuses 2 umgeben, an welchem ein rohrseitiger Außenflansch 3 zur Verbindung mit dem Gegenflansch 4 einer weiteren Gehäusehälfte einen Dichtspalt 5 aufweist. Radial unterhalb des Flansches 3 befindet sich ein Innenflansch 6, in welchem am Umfang verteilt einige Ölkanäle 7, etwa parallel zur Welle 1, vorgesehen sein können. Im Flansch 3 befindet sich mindestens ein zur Welle bevorzugt radial angeordneter Kabelkanal 8 für den Anschluß des Magneten. In die Öffnung des Innenflansches 6 läßt sich konzentrisch zur Welle 1 eine Buchse 10 teleskopartig einsetzen und auf beliebige Weise axial fixieren. Im gezeigten Beispiel hat die Buchse 10 einen äußeren Ringbund 11, der in eine radiale Eindrehung 9 paßt, so daß die Buchse 10 axial keinen Zusatzbauraum benötigt. Etwa auf einem Drittel der Länge der Buchse 10 befindet sich eine Innenringschulter 12 aus dem gleichen ferromagnetischen Material der Buchse 10. Das eingriffsabgewandte innere Ende der Buchse 10 wird durch einen ringförmigen Boden 13, welcher hier mittels Sicherungsringen 14 und 15 in der Buchse axial arretiert ist, gebildet. Axial zwischen dem Boden 13 und der Innenringschulter 12 liegt ein Ringmagnet 16 an der Innenringschulter 12 an. Dabei bleibt ein axialer Luftspalt 17 gegenüber einer in einer Keilverzahnung der Welle 1 drehfesten, aber axial verschieblichen und gegenüber dem Ringmagneten 16 drehbaren Schiebemuffe 18, deren eingriffsabgewandtes Ende bei geöffneter Zahnkupplung gegen den Boden 13 anliegt. An diesem Ende trägt die Schiebemuffe 18 auch eine bei offener Kupplung vom Magneten 16 beabstandete ringförmige Ankerscheibe 19 aus ferromagnetischem Material, welche im Beispiel auf der Schiebemuffe 18 durch einen Sicherungsring 20 und eine magnetseitige Radialeindrehung axial fixiert ist. Am eingriffsseitigen Ende der Schiebemuffe 18 ist eine radiale Mitnahmeverzahnung 21 vorgesehen, welche bei Erregung des Magneten 16 in eine passende Gegenverzahnung 22 auf der magnetseitigen Frontseite der Nabe 23 eines an sich beliebigen Kupplungsrades 24 in Eingriff gebracht wird. Gemäß dem Beispiel wird durch die Nabe 23, kurz vor der Gegenverzahnung 22, ein Wälzlager 25 konzentrisch zur Welle 1 geführt. Dabei ist der Außenring des Wälzlagers in der Buchse 10 innerhalb des Innenflansches 6 abgestützt. Zwischen Welle 1 und Nabe 23 befindet sich im Beispiel ein Ringraum 27, in welchem eine die Welle umgreifende Rückstellfeder 26 axial zwischen der eingriffsseitigen Stirnseite der Schiebemuffe 18 und einem angetriebenen Bund bzw. Zahnrad 28 bei geschlossener Kupplung axial vorgespannt ist. Der Elektro-Anschluß des Magneten 16 erfolgt über Kabel 29, 30 im Kabelkanal 8.

Fig. 1A zeigt eine alternative Beeinflussungsmöglichkeit der Anzugskräfte des Elektro-Magneten 16, indem der Anker 19A mittels sich in Richtung des Magneten 16 verjüngendem Außendurchmesser und radial darüber mit einem entsprechend in Richtung des Magneten 16 einen erweiterten Durchmesser aufweisenden Polring 31 in der Buchse 10 axial festgelegt wird. Auf diese Weise kann ein bei gleichem Stellhub kleinerer Luftspalt 32 für den Anker 19A sowie eine Starterleichterung bzw. Stromersparnis erreicht werden. Die geschilderte Konstruktion erlaubt es, wahlweise bei entsprechendem Bedarf die funktionsgerecht vormontierten Elemente der Elektromagnet-Zahnkupplung beschädigungssicher, als einheitliches Ganzes, von der offenen Seite der Gehäuseflanschverbindung 3, 4 her auf die Welle 1 aufzuschieben, ohne daß es spezieller Gestaltungsvorkehrungen an Welle 1 oder Getriebegehäuse 2 bedürfte.

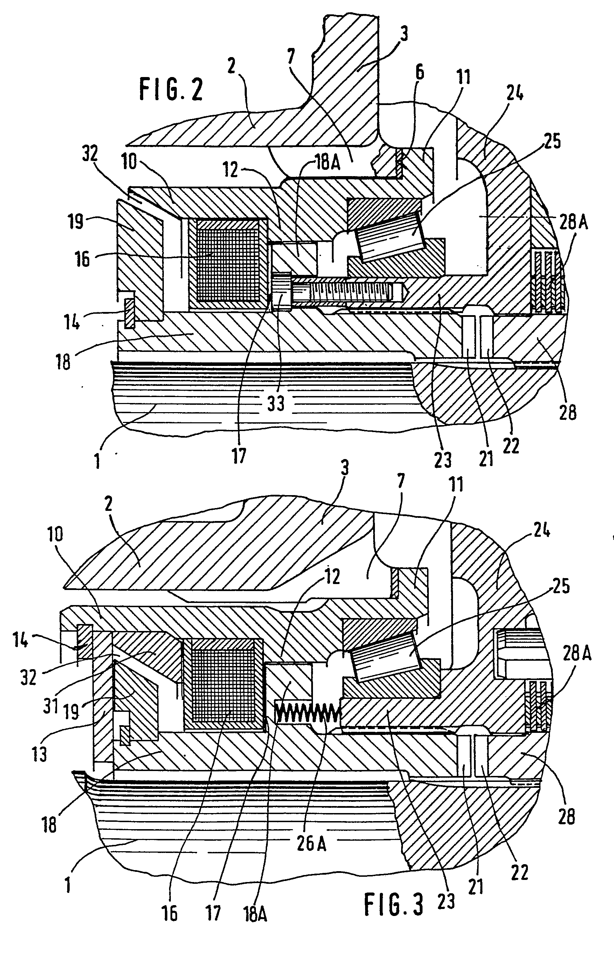

In Fig. 2 ist die Schiebemuffe 18 mittels einer eingriffsseitigen Außenverzahnung, die in eine Innenverzahnung der antreibenden Nabe 23 eingeschoben ist, gegenüber der Welle 1 außer Formschluß. Die Nabe 23 gehört hier indessen zu einem antreibenden Außenlamellenträger einer Reibverbindung 28A, durch deren Aktivierung über einen mit der Welle 1 über eine Keilverzahnung formschlüssigen Innenlamellenträger (28) die.

Drehzahlen von antreibendem Kupplungsteil und anzutreibender Welle möglichst weitgehend aneinander angeglichen werden, ehe die Zahnkupplung 21, 22 in Eingriff gelangt. Hierzu greift die Nabe 23 deutlich axial über die Verzahnungen 21, 22 hinweg. Zwischen der Zahnkupplung 21, 22 und dem Magneten 16 ist eine Keilverzahnung der Schiebemuffe 18 und der Nabe 23, überwiegend noch axial innerhalb der Buchse 10, vorgesehen. Die Drehmitnahme der Schiebemuffe 18 könnte indessen auch unmittelbar über axial in die Nabe 23 eingesetzte Bolzenschrauben 33 vorgesehen werden, indem diese durch Bohrungen in einen außen überstehenden Ringkragen 18A der Schiebemuffe 18, axial zwischen Magnet 16 und Nabe 23, eingreifen. Mittels entsprechend bemessener Köpfe und Länge der Bolzenschrauben 33 ist deren Verwendung als verstellbare Hubbegrenzung für die Schiebemuffe 18 ausführbar. Damit wird erreicht, daß der Ringkragen 18A gegenüber dem Ringmagneten 16 auch bei geöffneter Kupplung noch einen Restluftspalt 17 aufweist. Bei Aktivierung des Magneten 16 wird die hier als Bodenabschluß der Buchse 10 dienende Ankerscheibe 19 auf der sie tragenden Schiebemuffe 18 an den Magneten 16 herangezogen, bis die Zahnverbindung 21, 22 greift. Die Schiebemuffe 18 ist bei dieser Ausführung zusammen mit dem Kupplungsrad 24, welches z.B. das Tellerrad eines Differentials sein kann, gegenüber der Welle 1 drehbar und läuft erst mit ihr synchron, wenn die Zahnverbindung 21, 22 in Eingriff ist. Dabei kann die beim Ringbund 11 der Buchse 10 entstehende Reibung mittels einer am Innenflansch 6 des Gehäuses vorgesehenen Anlaufscheibe verringert werden.

Diese Ausgestaltung hat gegenüber Fig. 1 auch den Vorteil, daß die elektromagnetischen Streuflüsse zur Welle 1 noch stärker reduziert werden, weil die Schiebemuffe 18 bis zum Zahneingriff ohne engere magnetische Verbindung zur Welle 1 bleibt. Zur weiteren Intensivierung der elektromagnetischen Wirkungen können die Bolzenschrauben 33 sowie mit ihnen eingesetzte Distanzhülsen (ohne Nummer) aus nichtmagnetischem Material gefertigt sein. Die Schiebemuffe 18 bleibt durch diese Anordnung unbeeinflußt von Axialbewegungen der Welle 1, wie sie bei Lenkachsen meistens auftreten.

In Fig. 3 ist in gleicher Weise wie bei Fig. 2 ebenfalls die Schiebemuffe 18 mit dem Kupplungsrad 24 durch die Keilverzahnung der Nabe 23 formschlüssig. Indessen sind hier Möglichkeiten gezeigt, axial zwischen Nabe 23 und Ringkragen 18A noch Rückstellfedern 26 innerhalb der Buchse 10 mit unterzubringen, die nach Fig. 1 noch separat direkt auf die Welle 1 aufgeschoben werden mußten. Außerdem ist hier zur Verstärkung der Anzugskraft des Magneten 16 ein ankerscheibenseitiger Polring 31 in der Innenwand der Buchse 10 vorgesehen, welcher über parallel konische Flächen zusammenwirkt mit der das eingriffsabgewandte Ende der Schiebemuffe 18 bildenden Ankerscheibe 19. Sofern nicht im Wechsel mit einzelnen Rückstellfedern 26A, ähnlich Fig. 2, Bolzenschrauben 33 als öffnungsseitige Anschläge vorgesehen werden, kann der hier gezeigte Boden 13 der Buchse 10 als Anschlag dienen und das Kupplungsinnere auch vor möglichem Schmutzeintrag aus dem Achsgetriebe schützen.

Durch Verwendung von Buntmetall für den Boden 13 und durch den Abstand der Buchse 10 gegenüber dem Getriebegehäuse 2 sowie dank der über dem Magneten 16 einen Luftspalt um die frei vorkragend vorab abgestützte Buchse 10 ergebenden Anordnung werden magnetische Streuverluste weitestgehend reduziert und es reichen bereits kleine elektrische Leistungen für alle vorkommenden Schaltkräfte. Die Öffnungen vor den Ölkanälen 7 und der Lichtraumabstand zwischen Buchse 10 und Getriebegehäuse 2 erlauben es zudem, die Kabel 29, 30 beschädigungssicher zu montieren und ohne Beeinträchtigung des Getriebe-Schmiersystems geschützt unterzubringen. Die zuvor beschriebene Einbaulösung ist nicht nur auf Elektromagnet-Zahnkupplungen anwendbar, sondern z.B. auch auf entsprechend gestaltete Lamellenbremsen. Beispielsweise kann es bei Fahrzeuggetrieben günstig sein, zu den Rädern abzweigende Achsgehäuse für die fakultative Anbringung einer Buchse der erfindungsgemäßen Art vorzusehen, so daß sich beispielsweise auf der einen Steckwelle eine Elektro-Sperrkupplung der gezeigten Art und auf der gegenüberliegenden eine nasse Elektro-Bremse unterbringen läßt. Dabei ergäbe sich als besonderer Vorteil, daß beim Bremsen radial durch die Bremsscheiben-Zwischenspalte in Richtung Gehäuse 2 hindurchtretendes Schmieröl im Umgebungsringspalt der Buchse 10 und in den Ölkanälen 7 des Innenflansches 6 auf eine kühlungsintensivierende Weise am luftgekühlten Außenmantel des Gehäuses 2 entlanggeführt wird.

Bezugszeichen
1 Welle
2 Getriebegehäuse
3 Flansch von 2
4 Gegenflansch von 3
5 Dichtspalt von 3, 4
6 Innenflansch von 2
7 Ölkanal in 2
8 Kabelkanal in 2
9 Eindrehung in 6
10 Buchse
11 Ringbund von 10
12 Innenringschulter an 10
13 Boden von 10, Anlaufscheibe
14 äußerer Sicherungsring von 13
15 innerer Sicherungsring von 13
16 Ringmagnet
17 Luftspalt um 16
18 Schiebemuffe
18A Ringkragen an 18
19 Ankerscheibe
20 Sicherungsring von 20
21 Mitnahmeverzahnung an 18
22 Gegenverzahnung
23 Nabe
24 Kupplungsteil
25 Wälzlager
26 Rückstellfeder
27 Ringraum in 24
28 Bund, Zahnrad
28A Reibverbindung von 24 und 1
29 Kabel zu 16
30 Kabel von 16
31 Polring in 10
32 Luftspalt zwischen 19 und 31
33 Bolzenschrauben in 28

**Patentansprüche**

1. Anordnung einer Elektromagnet-Zahnkupplung, welche eine in einen Flansch (3) eines Gehäuses (2) eingeschobene Buchse (10) aufweist, in der ein Ringmagnet (16) vormontiert ist, der zur Betätigung einer Mitnahmeverzahnung (21) eine Welle (1) umschließt, vor welcher ein Kupplungsrad (24 bzw. 28) mit einer Gegenverzahnung (22) angeordnet ist, dadurch gekennzeichnet,

a) daß die Buchse (10) zusätzlich zum Ringmagneten (16) mit einer antriebsseitig aus einem Gehäuseflansch (3) herausstehenden Schiebemuffe (18) und mit einer auf deren eingriffsabgewandtem Ende angebrachten Ankerscheibe (19) sowie mit der auf ihrem eingriffsseitigen Ende angeordneten Mitnahmeverzahnung (21) zu einer funktionsrichtig vormontierten Baugruppe zusammengefügt ist,

b) welche Baugruppe konzentrisch zur zu kuppelnden Welle (1) im Bereich eines Lagers (25) des Kupplungsrades (24) in die gemeinsame Buchse (10) eingeschoben ist

c) und daß die Mitnahmeverzahnung (21) bei Aktivierung des Ringmagneten (16) mit der außerhalb der Buchse (10) an einer die Welle (1) umfassenden Nabe (23) des Kupplungsrades (24) angebrachten Gegenverzahnung (22) kuppelbar ist.

2. Anordnung nach Anspruch 1, dadurch gekennzeichnet, daß die im Flansch (3) des Gehäuses (2) gehaltene Buchse (10) über den Außenring eines die Nabe (23) im Gehäuse (2) führenden Wälzlagers (25) gegen dessen auf der Nabe (23) sitzenden Innenring so vorspannbar ist, daß Verstellungen der Gehäuseflanschverbindung (3, 4) die Axialabstände zwischen Anker (19), Mitnahmeverzahnung (21) und Ringmagnet (16) unbeeinflußt lassen.

3. Anordnung nach Anspruch 1, dadurch gekennzeichnet, daß die Buchse (10) an einem im Einbau etwa radial über dem Wälzlager (25) zu liegen kommenden Ringbund (11) axial gegen einen eingriffsseitigen Innenflansch (6) des Getriebegehäuses (2) angepaßt ist.

4. Anordnung nach Anspruch 1, dadurch gekennzeichnet, daß die Schiebemuffe (18) durch eine auf eine Außenverzahnung der Welle (1) geschobene Innenverzahnung auf der Welle (1) drehfest geführt ist und die Nabe (23) einer Reibverbindung (28A) zugehört, die mit einem auf der Welle (1) drehfesten weiteren Bund (28) zusammenwirkt, wobei Mittel vorgesehen sind, um die ElektromagnetZahnkupplung (16 ff.) zeitlich nach der Aktivierung besagter Reibverbindung (28A) einzukuppeln.

5. Anordnung nach Anspruch 4, dadurch gekennzeichnet, daß die Schiebemuffe (18) eine Außenverzahnung hat, die in eine Innenverzahnung der Nabe (23) greift.

6. Anordnung nach Anspruch 4, dadurch gekennzeichnet, daß die Schiebemuffe (18) an einem ihr axial zwischen Ringmagnet (16) und Lager (25) radial überstehend angeformten Ringkragen (18A) einen Anschlag in Öffnungsrichtung der Kupplungsverzahnung (21, 22) gegenüber einer eingriffsseitig vorstehenden Stirnseite der Nabe (23) bzw. eines darauf befestigten Innenringes des Lagers (25) aufweist.

7. Anordnung nach Anspruch 4, dadurch gekennzeichnet, daß der Anschlag aus den Ringkragen (18A) in Schließrichtung der Schiebemuffe (18) lose durchdringenden und im eingriffsseitigen Ende der Nabe (23) axial eingeschraubten Bolzenschrauben (33) besteht, welche bei der Vormontage eingesetzt werden.

8. Anordnung nach Anspruch 4, dadurch gekennzeichnet, daß die Schiebemuffe (18) an ihrem eingriffsabgewandten Ende einen die Buchse (10) axial abdeckenden, ringscheibenförmigen Boden (13) hat, gegen welchen die Schiebemuffe (18) bei geöffneter Verzahnung (21, 22) axial anliegt.

9. Anordnung nach Anspruch 8, dadurch gekennzeichnet, daß der Boden (13) in der Buchse (10) lösbar befestigt ist und aus nichtmagnetischem Material besteht.

10. Anordnung nach Anspruch 4, dadurch gekennzeichnet, daß zwischen Ringmagnet (16) und Ringkragen (18A) der Schiebemuffe (18) bei deren Endlage in Öffnungsstellung noch ein axialer Luftspalt (17) bleibt.

11. Anordnung nach Anspruch 1, dadurch gekennzeichnet, daß axial zwischen dem Ringkragen (18A) der Schiebemuffe (18) und einer verzahnungsfreien Stirnseite einer der Naben (23, 28) mindestens eine Rückstellfeder (26) abgestützt ist.

12. Anordnung nach Anspruch 3, dadurch gekennzeichnet, daß der Innenflansch (6) eine radiale Eindrehung (9) für den Ringbund (11) der Buchse (10) aufweist, so daß diese axial bündig zur eingriffsseitigen Stirnfläche des Innenflansches (6) des Gehäuses (2) angeordnet ist.

13. Anordnung nach Anspruch 4, dadurch gekennzeichnet, daß die Mitnahmeverzahnung (21) radial außerhalb der Rückstellfeder (26) am Ringkragen (18A) der Schiebemuffe (18) auf seiner eingriffsseitigen Stirnseite angeordnet ist.

14. Anordnung nach Anspruch 1, dadurch gekennzeichnet, daß die Ankerscheibe (19) aus einer sich in Richtung Ringmagnet (16) im Durchmesser verjüngenden Ringscheibe (19A) besteht, welche sich im stromlosen Zustand unter Wahrung eines konischen Luftspaltes (32) radial außerhalb eines sich mit etwa gleichem Winkel in Richtung Ringmagnet (16) im Durchmesser verjüngenden Polringes (31) befindet, der axial zwischen dem Ringmagneten (16) und dem Deckel (13) auf der Innenseite der Buchse (10) eingespannt ist.

15. Anordnung nach Anspruch 1, dadurch gekennzeichnet, daß zwischen Buchse (10) und Innenwand des Getriebegehäuses (2) Ölkanäle (7) in Hauptrichtung koparallel zur Welle (1) vorgesehen sind, die den Innenflansch (6) außerhalb der Buchse (10) durchdringen.

16. Anordnung nach Anspruch 1, dadurch gekennzeichnet, daß in der Buchse (10) der Ringmagnet (16) etwa radial unter dem Gehäusetrennflansch (3) des Getriebegehäuses (2) angeordnet ist, in welchen ein Kabelkanal (8) für Anschlußkabel (29, 30) des Ringmagneten (16) eingearbeitet ist.

17. Anordnung nach Anspruch 1, dadurch gekennzeichnet, daß das Getriebegehäuse (2) ein Achsgehäuse ist und die die Gegenverzahnung (22) tragende Nabe (23) bzw. das Zahnrad (28) in einem zur Welle (1) konzentrischen Differentialgetriebe gelagert ist, die Nabe (23) als Tellerrad bzw. das Zahnrad (28) als Achskegelrad wirkt und den Innenring des Wälzlagers (25) trägt.

**Revendications**

1. Agencement dun embrayage à denture à électro-aimant, qui comporte un fourreau (10) inséré dans un flasque (3) d'un carter (2), dans lequel est pré-assemblé un aimant annulaire (16) entourant un arbre (1) pour actionner une denture d'accouplement (21), devant laquelle se trouve une roue d'accouplement (24, 28) pourvue d'une denture opposée (22), caractérisé:

a) en ce que le fourreau (10) est pré-assemblé de façon à former un sous-ensemble fonctionnel préfabriqué comprenant, outre l'aimant annulaire (16), un manchon coulissant (18) s'étendant du côté de l'entraînement par rapport à un flasque (3) du carter, et un disque d'induit (19) monté à l'extrémité du manchon du côté opposé à l'accouplement, ainsi que la denture d'accouplement (21) disposée à l'extrémité d'accouplement du manchon,

b) ledit sous-ensemble étant inséré dans le fourreau commun (10) concentriquement par rapport à l'arbre (1) à accoupler et à proximité d'un roulement (25) de la roue d'accouplement (24),

c) et en ce que la denture d'accouplement (21) est agencée pour s'accoupler, quand l'aimant annulaire (16) est activé, à la denture opposée (22) ménagée hors du fourreau (10) sur un moyeu (23) de la roue d'accouplement (24), ce moyeu entourant l'arbre (1).

2. Agencement selon la revendication 1, caractérisé en ce que ledit fourreau (10), maintenu dans le flasque (3) du carter (2), est précontraint contre la bague intérieure, montée sur le moyeu (23) d'un roulement à rouleaux (25) guidant le moyeu (23) dans le carter (2), au moyen de la bague extérieure de ce roulement, de sorte que des mouvements du bridage des flasques (3, 4) du carter sont sans influence sur les distances axiales entre l'induit (19), la denture d'accouplement (21) et l'aimant annulaire (16).

3. Agencement selon la revendication 1, caractérisé en ce que le fourreau (10) est ajusté axialement contre un collet intérieur (6) du carter de transmission (2), du côté de l'accouplement, sur un épaulement annulaire (11) se trouvant, après montage, radialement sensiblement autour du roulement à rouleaux (25).

4. Agencement selon la revendication 1, caractérisé en ce que le manchon coulissant (18) est monté sur l'arbre (1) et solidaire de lui en rotation, au moyen d'une denture intérieure coulissant sur une denture extérieure de l'arbre (1), et en ce que le moyeu (23) fait partie d'une liaison à friction (28A) qui coopère avec un autre élément annulaire (28) solidaire en rotation de l'arbre (1), des moyens étant prévus pour enclencher l'embrayage à denture à électro-aimants (16 et suivants) postérieurement à l'actionnement de ladite liaison à friction (28A).

5. Agencement selon la revendication 4, caractérisé en ce que le manchon coulissant (18) comporte une denture extérieure qui est engagée dans une denture intérieure du moyeu (23).

6. Agencement selon la revendication 4, caractérisé en ce que le manchon coulissant (18) comporte, sur un collet annulaire (18A) proéminent radialement sur lui et placé axialement entre l'aimant annulaire (16) et le roulement (25), un arrêt agissant dans le sens d'ouverture de l'embrayage à denture (21, 22) par rapport à une face frontale du moyeu (23) qui est proéminente du côté de l'accouplement et/ou à une bague intérieure du roulement (25), fixée sur le moyeu.

7. Agencement selon la revendication 4, caractérisé en ce que ledit arrêt est formé par des vis (33) traversant librement ledit collet annulaire (18A) dans le sens de fermeture du manchon coulissant (18) et vissées axialement dans l'extrémité du moyeu (23) du côté de l'accouplement, ces vis étant mises en place lors du pré-assemblage.

8. Agencement selon la revendication 4, caractérisé en ce que le manchon coulissant (18) est pourvu, à son extrémité opposée à l'accouplement, d'un fond (13) en forme de disque annulaire qui ferme axialement le fourreau (10) et contre lequel le manchon coulissant (18) s'appuie axialement quand l'accouplement à denture (21, 22) est ouvert.

9. Agencement selon la revendication 8, caractérisé en ce que ledit fond (13) est fixé dans le fourreau (10) de manière amovible et est fait d'une matière amagnétique.

10. Agencement selon la revendication 4, caractérisé en ce que, en position de fin de course d'ouverture, il reste un intervalle axial (17) entre l'aimant annulaire (16) et le collet annulaire (18A) du manchon coulissant (18).

11. Agencement selon la revendication 1, caractérisé en ce qu'au moins un ressort de rappel (26) est comprimé axialement entre le collet annulaire (18A) du manchon coulissant (18) et une face frontale non dentée d'un des moyeux (23, 28).

12. Agencement selon la revendication 3, caractérisé en ce que ledit collet intérieur (6) comporte une gorge radiale tournée (9) agencée pour recevoir l'épaulement annulaire (11) du fourreau (10), de façon que celui-ci soit disposé axialement à fleur de la face frontale du collet intérieur (6) du carter (2) du côté de l'accouplement.

13. Agencement selon la revendication 3, caractérisé en ce que la denture d'accouplement (21) se trouve radialement à l'extérieur du ressort de rappel (26) sur le collet annulaire (18A) du manchon coulissant (18) sur la face frontale de celui-ci du côté de l'accouplement.

14. Agencement selon la revendication 1, caractérisé en ce que le disque d'induit (19) est formé d'un élément annulaire (19A) dont le diamètre diminue en direction de l'aimant annulaire (16) et qui en position non activée électriquement, se trouve radialement à l'extérieur d'un anneau polaire (31) ayant un diamètre diminuant en direction de l'aimant annulaire (16) sensiblement sous le même angle et laisse subsister un intervalle conique (32) entre lui et cet anneau, l'anneau polaire étant serré axialement entre l'aimant annulaire (16) et le couvercle (13) de l'extrémité intérieure du fourreau (10).

15. Agencement selon la revendication 1, caractérisé en ce que des canaux à huile (7) sont disposés dans une direction générale parallèle à l'arbre (1) entre le fourreau (10) et la paroi intérieure du carter de transmission (2), ces canaux traversant le collet intérieur (6) en dehors du fourreau (10).

16. Agencement selon la revendication 1, caractérisé en ce que l'aimant annulaire (16) est disposé dans le fourreau (10) radialement sous le flasque (3) de jonction du carter de transmission (2), dans lequel est ménagé un conduit (8) pour des câbles (29, 30) de raccordement de l'aimant annulaire (16).

17. Agencement selon la revendication 1, caractérisé en ce que le carter de transmission (2) est un carter d'essieu et en ce que le moyeu (23) portant la denture opposée (22), ainsi que la roue dentée (28), sont montés dans un différentiel concentrique à l'arbre (1), dans lequel le moyeu (23) sert de couronne extérieure et la roue dentée (28) sert de pignon conique d'essieu, l'un d'eux portant la bague intérieure du roulement à rouleaux (25).

**Claims**

1. Arrangement of an electromagnet-gear coupling, which has a bush (10) introduced into a flange (3) of a casing (2), in which an annular magnet (16) is pre-assembled which encloses a shaft (1) for actuating an entrainment gear (21), in front of which a coupling wheel (24 or 28) having a counter gear (22) is disposed, characterised in that

a) the bush (10) in addition to the annular magnet (16) is assembled with a sliding sleeve (18) which projects from a casing flange (3) on the drive side and with an armature disk (19) disposed on its end remote from meshing as well as with the entrainment gear (21) disposed on its end at the meshing side to form a correctly functioning pre-assembled subassembly,

b) said subassembly being introduced concentrically to the shaft (1) to be coupled in the region of a bearing (25) of the coupling wheel (24) into the common bush (10),

c) and in that the entrainment gear (21) on activation of the annular magnet (16) may be coupled with the counter gear (22) mounted outside of the bush (10) on a hub (23) of the coupling wheel (24) which encircles the shaft (1).

2. Arrangement according to claim 1, characterised in that the bush (10) supported in the flange (3) of the casing (2) may be prestressed by means of the outer ring of a rolling bearing (25), which guides the hub (23) in the casing (2), towards the inner ring of said rolling bearing seated on the hub (23) in such a manner that the axial distances between armature (19), entrainment gear (21) and annular magnet (16) are unaffected by adjustments to the casing flange connection (3, 4).

3. Arrangement according to claim 1, characterised in that the bush (10) is adapted, at an annular collar (11) which on installation comes to lie approximately radially above the rolling bearing (25), axially towards an inner flange (6) of the gearbox casing (2) on the meshing side.

4. Arrangement according to claim 1, characterised in that the sliding sleeve (18) is guided non-rotatably on the shaft (1) by means of an internal gear pushed onto an external gear of the shaft (1) and the hub (23) is part of a friction connection (28A) which cooperates with a further collar (28) disposed non-rotatably on the shaft (1), means being provided for engaging the electromagnet-gear coupling (16 ff.) in a timed manner after activation of said friction connection (28A).

5. Arrangement according to claim 4, characterised in that the sliding sleeve (18) has an external gear which meshes in an internal gear of the hub (23).

6. Arrangement according to claim 4, characterised in that the sliding sleeve (18) has, at an annular collar (18A) axially formed thereon between annular magnet (16) and bearing (25) in a radially projecting manner, a stop in the direction of opening of the coupling gear (21, 22) relative to a face projecting on the meshing side of the hub (23) or of an inner ring of the bearing (25) fastened thereon.

7. Arrangement according to claim 4, characterised in that the stop comprises screw bolts (33) fitted during pre-assembly which loosely penetrate the annular collar (18A) in the direction of closing of the sliding sleeve (18) and are axially screwed in the end of the hub (23) on the meshing side.

8. Arrangement according to claim 4 characterised in that the sliding sleeve (18) has at its end remote from meshing a ringwheel-like base (13) which axially covers the bush (10) and against which the sliding sleeve (18) rests axially when the gear (21, 22) is open.

9. Arrangement according to claim 8, characterised in that the base (13) is detachably fastened in the bush (10) and is made of non-magnetic material.

10. Arrangement according to claim 4, characterised in that an axial air gap (17) remains between the annular magnet (16) and the annular collar (18A) of the sliding sleeve (18) in the latter's end, position in open setting.

11. Arrangement according to claim 1, characterised in that at least one readjusting spring (26) is supported axially between the annular collar (18A) of the sliding sleeve (18) and a gear-free face of one of the hubs (23, 28).

12. Arrangement according to claim 3, characterised in that the inner flange (6) has a radial turned groove (9) for the annular collar (11) of the bush (10) so that the latter is disposed axially flush with the face on the meshing side of the inner flange (6) of the casing (2).

13. Arrangement according to claim 4, characterised in that the entrainment gear (21) is disposed radially outside of the readjusting spring (26) on the annular collar (18A) of the sliding sleeve (18) on said collar's meshing side face.

14. Arrangement according to claim 1, characterised in that the armature disk (19) comprises a ring wheel (19A) whose diameter diminishes towards the annular magnet (16) and which in a de-energised state is located, while preserving a conical air gap (32), radially outside of a pole ring (31) whose diameter diminishes at approximately the same angle towards the annular magnet (16) and which is clamped axially between the annular magnet (16) and the cover (13) on the inside of the bush (10).

15. Arrangement according to claim 1, characterised in that oil channels (7) are provided between the bush (10) and the inner wall of the gearbox casing (2) in the main direction coparallel to the shaft (1), said channels penetrating the inner flange (6) outside of the bush (10).

16. Arrangement according to claim 1, characterised in that in the bush (10) the annular magnet (16) is disposed substantially radially below the casing separating flange (3) of the gearbox casing (2), a cable channel (8) for connection cables (29, 30) of the annular magnet (16) being worked in said casing separating flange.

17. Arrangement according to claim 1, characterised in that the gearbox casing (2) is an axle box and the hub (23) carrying the counter gear (22), or the gear wheel (28), is supported in a differential gear concentric to the shaft (1), with the hub (23) acting as a ring gear or the gear wheel (28) acting as a bevel side gear and carrying the inner ring of the rolling bearing (25).

FIG.1A

FIG.1

FIG.2

FIG.3